# EUROPEAN PATENT SPECIFICATION

(11) **EP 0 405 430 B1**
(45) Date of publication and mention of the grant of the patent: **19.04.1995**
(21) Application number: 90112096.4
(22) Date of filing: 26.06.1990
(51) Int. Cl.: G01S 13/93, G01S 7/20, G01S 7/22

(54) **Air traffic display apparatus**
Luftverkehranzeigeapparat
Affichage pour le traffic aérien

(30) Priority: 30.06.1989 US 374420
(43) Date of publication of application: 02.01.1991
(73) Proprietor: HONEYWELL INC., Minneapolis Minnesota 55408 (US)
(72) Inventor: Hancock, William R., Phoenix, AZ 85022 (US)
(74) Representative: Rentzsch, Heinz, Dipl.-Ing.

(56) References cited:
- DE-A- 3 210 694
- GB-A- 1 076 574
- US-A- 3 300 778
- US-A- 3 611 371

## Description

The present invention pertains to air traffic displays and particularly to display formats for an air traffic alert and collision avoidance system (TCAS).

The function of the TCAS display is to present air traffic information, declare threats, and provide advisories on potential air traffic conflicts before the closest point of approach. The TCAS display of the related art uses two-dimensional graphics to convey traffic information in the own aircraft's own protected volume of airspace. However, since two-dimensional graphics can only depict information on two (X- and Y-axes) of the three dimensions required to completely represent spatial traffic relationships for TCAS (X-, Y-, and Z-axis), numerics are used to portray relative altitude on the Z-axis. This two-dimensional plan view display of the TCAS traffic information (supplemented with numeric data tags for the third dimension, altitude) does not provide a direct visual display of the dynamic spatial relationships existing between air traffic in the natural three-dimensional airspace. Interpretation of such a display requires considerable time and mental effort, in that it requires pilots to mentally construct a three-dimensional image of the traffic situation by combining graphically displayed azimuth and range information with numerically presented altitude information.

The related art TCAS display, therefore, is limited to function as an aid to direct visual acquisition of target aircraft, rather than as a correct, veridical, and easily interpretable complete "picture" of the current traffic situation. Pilots simply use the presented information as a cue for visual search to locate potential threats by direct visualization of aircraft outside the cockpit. Furthermore, since the traffic information is dynamic and continuously updated, direct visualization will require pilots to continuously alternate their attention from reading the numerics on the head-down TCAS display to the head-up search up for aircraft outside the cockpit. Thus, using the related art TCAS display, pilots often find it time-consuming and confusing to visually acquire and process dynamic changes in the air traffic situation under moderate or high cockpit workload situations.

Attempts of the related art to solve the problems of indirect visualization of conventional displays have focussed on basic symbology refinement for the two-dimensional TCAS display format. Efforts have been made to reduce confusion and misinterpretation by modifying the symbols. For example, all the numeric codes were initially displayed above the aircraft symbol with a "+" or "-" sign to indicate relative elevation. The most current baseline TCAS display presents the numerics either above or below the symbol for conceptual compatibility. No effort has been made to explore other innovative approaches or to empirically validate current design concepts. However, research on display formats for other applications reveals potential benefits of an innovative three-dimensional perspective format. Ground-based perspective traffic display formats have been studied in the related art to demonstrate the advantages of utilizing perspective graphics for portraying complex spatial situations. Additionally, perspective displays for naval battlefield management systems have been previously studied to examine the feasibility and advantages of three-dimensional graphic presentations. Such studies have shown significant advantages of three-dimensional formats over two-dimensional formats. The invention aims for TCAS display formats having three-dimensional perspective color graphics and achieves those objects by the apparatus as defined in claim 1. Preferred details are described in the dependent claims.

A traffic information display apparatus according to the preamble of claim 1 is known from US-A 3 300 778. It shows a display system including a two-dimensional information display surface on which the three-dimensional position of an object in space is continuously displayed with respect to a known position. The system comprises:
a grid superimposed on the display surface consisting of a series of equidistant vertical lines which represent a fixed amount of bearing with respect to each other, intersected by a series of equidistant horizontal lines which represent a fixed amount of altitude with respect to each other;
means for representing the object on the display surface by an indication comprising a horizontal line and a vertical line having at least one point in common with said horizontal line;
means for representing the known position on the display surface by an indication;
means for positioning the known position indication on the display surface at the intersection of any of said superimposed horizontal and vertical lines;
means for controlling the distance of said vertical line of the object indication on the display surface from the vertical reference line that intersects the known position indication as a function of the bearing of the object with respect to the known position, so that the distance from said vertical reference line is proportional to the bearing of the object with respect to the known position;
means for controlling the distance of said horizontal line of the object indication on the display surface from the horizontal reference line that intersects the known position indication as a function of the altitude of the object with respect to the known position so that the distance from said horizontal reference line is proportional to the altitude of the object with respect to the known position;
and means for controlling the length of said horizontal and vertical lines that comprise the object indication as a function of the range of the object with respect to the known position so that the length of said lines is inversely proportional to said range.

DE-A 32 10 694 shows an air traffic monitoring device including a perspective representation of the airspace to be monitored. This representation shows in a perspective view of said space confined by walls consisting of parallel grid lines together with symbols representing the aircraft, wherein said symbols are shown in a pseudo three-dimensional manner within said confined space. It is a representation suitable for ground-based air traffic controllers, but does not take into consideration the situation and view of a pilot flying his own aircraft.

The present invention relates to apparatus for the display of data in an airborne environment to assist the pilot in being more cognizant of the conditions in his or her airspace, thereby enhancing his or her situational awareness. This format is specifically designed for the Traffic-Alert and Collision Avoidance System (TCAS), in which air traffic information in a protected three-dimensional volume of airspace surrounding an aircraft is presented with respect to that aircraft. The present invention implements three-dimensional perspective graphics in color to display easily and directly interpretable dynamic spatial relationships for the TCAS system. This format is equally applicable to military situation awareness formats where the pilot needs to quickly and accurately recognize what traffic and targets are in the surrounding airspace.

The invention uses three-dimensional perspective graphics rather than a two-dimensional format supplemented with numeric data tags. The advantages of the present invention are: the realistic and intuitive portrayal of traffic information in three-dimensional perspective that results in the correct perception of the three-dimensional airspace; appropriate use of color, shape and size coding that is compatible with the pilots' expectations; and the integration of displayed situational information to facilitate rapid interpretation by pilots.

The primary objectives of this new display format are: to enhance the speed and accuracy of pilot's understanding of the egocentric traffic situation; to minimize complex cognitive processing and pilot mental workload; and to allow pilots to preview and plan evasive maneuvers earlier and more effectively in order to avoid potential air traffic conflicts. Therefore, the function of the TCAS display is greatly extended and is no longer limited to cueing for visual acquisition of traffic outside the aircraft.

### Brief Description of the Drawings

- Figure 1: shows the previously developed two-dimensional TCAS display format of the related art.
- Figure 2: shows a preferred embodiment of the present invention which is a three-dimensional perspective inside/out format for TCAS.

The proposed invention solves (or greatly minimizes) the problem of TCAS information portrayal by employing a three-dimensional perspective display format that emulates the spatial configuration of air traffic in a natural, egocentric three-dimensional airspace. The format presents a realistic view of the outside world from the pilot's point of view with appropriate depth cues to achieve the desired three-dimensional perspective. This perspective is referred to as an "inside/out" or "out-the-window" view. The inside/out view format has the advantage of direct mapping the three-dimensional air traffic information to the display in such a way that all of the necessary perceptual cues are integrated into a single pictorial format. The display is divided into two halves, one representing the forward view and the other the rear view. This is analogous to driving an automobile by naturally viewing forward through the windshield while monitoring the traffic behind using a rear-view mirror. The format enables pilots to quickly interpret the overall traffic situation surrounding their own aircraft without going through complex cognitive processing.

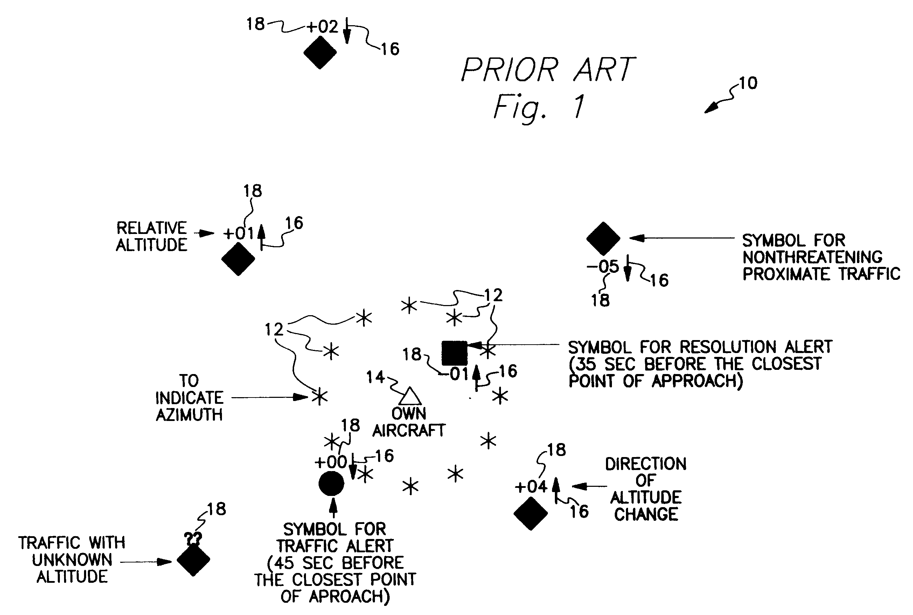

Any number of methods may be employed to map three-dimensional air traffic positions to a two-dimensional plan view. The use of two-dimensional graphics, supplemented with an abstract code for the third dimension (e.g., numerical data tags for altitude coding), is one method. This method of information portrayal serves as foundation for existing TCAS displays. Figure 1 illustrates the TCAS display format 10 developed in the related art which has served as the basic information display for existing TCAS systems. As can be seen from figure 1, graphical features are used to convey information about other aircraft in azimuth, range, direction of altitude change, and time before the closest point of approach. A ring of 12 asterisks 12 is positioned at a range of two nautical miles to provide information on azimuth and range in reference to own aircraft 14 position. Upward and downward arrows 16 are employed to depict the egocentric direction of altitude change of displayed air traffic. Redundant color and shape coding are implemented to indicate the status of other aircraft in terms of time before the closest point of approach.

The most noticeable deficiency in the related art display format 10 is the use of numeric codes 18 to convey relative altitude. In order to determine the relative three-dimensional positions of displayed air traffic, a pilot cannot use simple pictorial cues but must take the time to read the numerical altitude data tags 18 associated with each traffic symbol and mentally integrate these data with the graphically presented azimuth and range information. This reading time can delay the pilot's decision about the position of an aircraft that poses an immediate threat. Such delays can become critical under high pilot workload situations such as flying in turbulence. The use of numerics 18 becomes increasingly cumbersome for interpreting the egocentric air traffic situation as the number of aircraft within the protected airspace increases.

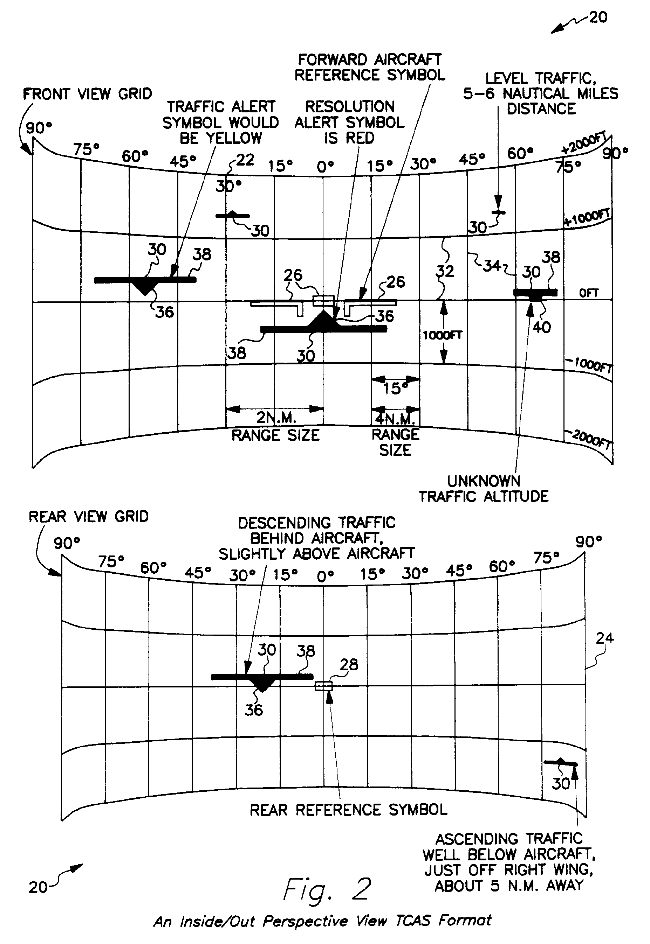

Figure 2 depicts embodiment 20 of the present invention which is an inside/out three-dimensional perspective TCAS format. The resolution advisory is integrated with the traffic display on which information is portrayed in a three-dimensional perspective format. The display presents an "out-the-window" forward view 22 and a "rear view mirror" image 24 of the air space behind the pilot. The traffic is mapped onto a pair of cylindrical grids 22 and 24 where grid 22 is used for the forward view and smaller grid 24 maps the traffic behind the aircraft. The forward view 22 includes aircraft reference symbol 26 to indicate the pilot's own heading and altitude. The rear view 24 includes a simplified aircraft reference symbol 28 representing direction and altitude directly behind the pilot's own aircraft.

The position of traffic symbol 30 relative to reference aircraft symbol 26 or 28 is used to represent the azimuth and elevation data. The size of traffic symbol 30 indicates the range of the target. The grid spacing is used for reference in determining all three parameters. Each horizontal grid line 32 represents a constant altitude differential (for instance, the middle line is 0 feet and the first line above middle could be +1000 feet). Vertical grid lines 34 indicate azimuth difference relative to the pilot's own heading (center line = 0 degrees, first line to right is +15 degrees relative to your own aircraft heading). The altitude and azimuth reading are taken from the center position of traffic symbol 30. The range to the target is represented by the size of the symbol. For example, a symbol which is two grid 34 spacing in width would be 2 nautical miles away, while a symbol only one grid 34 spacing wide would be 4 nautical miles distant. The use of location and size gives the pilot not only excellent absolute parametric values but also relative motion cues. The shape of traffic symbol 30 is also used to indicate vertical tendency. Symbol 30 with a triangle 36 above or below wing symbol 38 is ascending or descending. Rectangle 40 above wings 38 indicates a constant altitude, and rectangle 40 below wings 38 is used to specify a traffic entity with unknown altitude. Of course, other shapes can be used to indicate such parameters as type of aircraft, aircraft motion (in addition to altitude), and to indicate priority of threat.

Color coding is also incorporated in the symbol to indicate the status of the other aircraft. Range, radar lock on (military), closing rate, or time to impact can be conveyed with appropriate color selection to indicate the level of threat. With this perspective display, pilots can simply use the integrated perceptual cues from a quick glance to understand the dynamic traffic situation in the three-dimensional airspace without the necessity of direct visual contact. They can do advanced planning without going through complex and difficult cognitive processing. Consequently, pilots may rely on the traffic display when direct visual contact is limited in bad weather and flight by instrument is necessary.

The mapping used in display 20 is not true three-dimensional perspective view. The difference is that all traffic is mapped onto cylindrical grids 22 and 24 at the appropriate elevation and azimuth location and then scaled in size to reflect distance. Note also that each grid, 22 and 24, is not a true perspective view in that vertical lines 34 are all equally spaced. This is done so that targets to the side are the same size as forward traffic symbols for a given range. This simplified perspective view has a big advantage in that much less processing capability is required than for true three-dimensional perspective view formats. This mapping technique is an important component of the invention. The net result is an easy to calculate display format which provides the pilot with excellent situational awareness.

The embodiment of the inside/out perspective display format 20 described in this disclosure can be incorporated within other electronic avionics displays such as a vertical speed indicator, electronic attitude director indicator (EADI), electronic horizontal situation indicator (EHSI), or radar display. Variations in symbology such as color and shape coding can also be easily implemented. Such variations may be used to indicate a particular status, including whether the traffic is approaching towards or receding from the pilot's craft, or describe the identification characteristics of the traffic entity being symbolized. As the aviation industry extends the resolution advisory function of TCAS to include both vertical and horizontal maneuvers, a three-dimensional perspective format will allow pilots to comprehend the dynamic traffic situation quickly and to verify suggested maneuvers easily.

## Claims

1. A traffic information display apparatus situated in an own craft, for observing traffic in a volume about said own craft, comprising a first grid (22), representing a forward view from said own craft, said first grid comprising:
a) a first set of approximately parallel grid lines (32) spaced so as to represent different values of altitude relative to said own craft;
b) a second set of approximately parallel grid lines (34), overlapping said first set of grid lines (32), wherein each of said first set of grid lines is approximately perpendicular to each of said second set of grid lines, and each of said second set of grid lines is spaced so as to represent a particular value of azimuth relative to a heading of said own craft;
c) a reference symbol (26) on said first grid (22), situated at one intersection of one of said first set of grid lines (32) and one of said second grid lines (34), representing a location of said own craft on said first grid; and
d) at least one traffic symbol (30) representing a traffic entity, whereat
d1) said traffic symbol is located on said first grid at a location so as to indicate altitude and azimuth of the traffic entity relative to said own craft,
d2) has a width (38) approximately parallel to said first set of grid lines (32), that indicates distance of the traffic entity from said own craft with a greater width indicating closer distance of the traffic entity to said own craft and a narrower width indicating farther distance,
d3) has a second dimension (36) approximately parallel to said second set of grid lines (34) with an orientation that indicates whether the traffic entity is ascending, descending or remaining constant in altitude relative to own craft;
**characterized in that**
e) said first set of grid lines (32) has a middle line horizontal relative to a viewer of said first grid (22, 24) and representing an altitude of said own craft, and the remaining grid lines are cylindrically shaped in a fashion that said remaining lines gradually disperse in directions slightly away from the middle horizontal line of said first grid and therewith presenting the scene in a three-dimensional perspective; and
f) said reference symbol (26, 28) is situated on the middle horizontal line.

2. The apparatus of claim 1, **characterized in that** provided representing a rearward view from said own craft, and comprises:
a) a first set of approximately parallel grid lines spaced so as to represent different values of altitude relative to said own craft;
b) a second set of approximately parallel grid lines, overlapping said said first set of grid lines, wherein each of said first set of grid lines is approximately perpendicular to each of said second set of grid lines, and each of said second set of grid lines is spaced so as to represent a particular value of azimuth relative to a heading of said own craft;
c) a reference symbol (28) on said second grid (24), situated at one intersection of one of said first set of grid lines and one of said scond grid lines, representing a location of said own craft on said second grid; and
d) at least one traffic symbol (30) representing a traffic entity, whereat
d1) said traffic symbol is located on said second grid at a location so as to indicate altitude and azimuth of the traffic entity relative to said own craft,
d2) has a width (38) approximately parallel to said first set of grid lines, that indicates distance of the traffic entity from said own craft with a greater width indicating closer distance of the traffic entity to said own craft and narrower width indicating farther distance,
d3) has a second dimension (36) approximately parallel to said second set of grid lines, wherein the second dimension in combination with said width forms the symbol (30) having a particular shape and orientation that indicates whether the traffic entity is ascending, descending or remaining constant in altitude relative to own craft;
e) has a middle line horizontal relative to a viewer of said first grid (22, 24) and representing an altitude of said own craft, and the remaining grid lines are cylindrically shaped in a fashion that said remaining lines gradually disperse in directions slightly away from the middle horizontal lines of said first grid and therewith presenting in the scene a three-dimensional perspective; and
f) said reference symbol (26, 28) is situated on the middle horizontal line.

3. The apparatus of claim 1 or 2, **characterized in that** said traffic symbol (30) exhibits a characteristic in shape that indicates whether the represented traffic entity is approaching towards or receding from said own craft.

4. The apparatus of claim 1, 2 or 3, **characterized in that**
a) location of each of said traffic symbols (30) relative to said first set of grid lines (32), indicates an altitude of the respective traffic entity relative to said own craft, wherein each grid line represents a particular altitude value; and
b) location of each of said traffic symbols (30) relative to said second set of grid lines (34), indicates an azimuth of the respective traffic entity relative to said own craft, wherein each grid line represents a particular azimuth value.

5. The apparatus of one of the preceding claims, **characterized in that** each of the second set of grid lines (24) is straight and equidistant to another grid line.

6. The apparatus of one of the preceding claims, **characterized in that:**
a) each traffic symbol (30) has a bar-shaped figure (38) approximately parallel to said first sets of grid lines (32);
b) each bar-shaped figure (38) has a geometrically-shaped figure (36) superimposed on it;
c) a first geometrically-shaped figure (36) situated above of the bar (38) relative to the viewer indicates ascending altitude of a represented traffic entity;
d) the first geometrically-shaped figure (36) situated below the bar (38) relative to the viewer indicates descending altitude of a represented traffic entity;
e) a second geometrically-shaped figure (40) situated above the bar indicates constant altitude of a represented traffic entity; and
f) the second geometrically-shaped figure (40) situated below the bar indicates an unknown altitude of a represented traffic entity.

7. The apparatus of one of the preceding claims, **characterized in that**
a) each of said traffic symbols (30) is variable in shape in that one shape indicates a known altitude of the traffic entity and another shape indicates an unknown altitude of the traffic entity; and
b) each of said traffic symbols (30) is variable in color in that a particular color indicates a particular status of the traffic entity.

8. The apparatus of claim 7, **characterized in that**
a) each geometrically-shaped figure (36) having a first color indicates a resolution alert; and
b) each geometrically-shaped figure having a second color indicates a traffic alert.

## Patentansprüche

1. In einem Flugzeug vorgesehene Verkehrsinformationsanzeige zum Beobachten des Verkehrs in einem das eigene Flugzeug umgebenden Luftraum mit einem einen Vorwärtsausblick aus dem Flugzeug darstellenden ersten Gitterwerk (22), welches umfaßt:
a) eine erste Gruppe im wesentlichen paralleler Gitterlinien (32), deren Abstand unterschiedliche Höhendifferenzwerte zum eigenen Flugzeug wiedergibt;
b) eine zweite Gruppe im wesentlichen paralleler Gitterlinien (34), welche die Gitterlinien (32) der ersten Gruppe überlappen und wobei jede der ersten Gitterlinien im wesentlichen aufjeder der zweiten Gitterlinien senkrecht steht und der Abstand jeder Gitterlinie der zweiten Gruppe einen bestimmten Azimutwert bezogen auf die Flugrichtung des eigenen Flugzeugs wiedergibt;
c) ein auf dem ersten Gitter (22) in einem Schnittpunkt einer der ersten Gitterlinien (32) mit einer der zweiten Gitterlinie (34) angeordnetes, den Ort des eigenen Flugzeugs im ersten Gitter darstellendes Bezugssymbol (26);
d) wenigstens ein einen Verkehrsteilnehmer darstellendes Verkehrssymbol (30), wobei
d1) das Verkehrssymbol sich im ersten Gitter an einem Ort befindet, der die Höhe und den Azimut des Verkehrsteilnehmers bezogen auf das eigene Flugzeug anzeigt;
d2) eine Ausdehnung (38) längs der ersten Gitterliniengruppe (32) hat, welche den Abstand des Verkehrsteilnehmers vom eigenen Flugzeug anzeigt, wobei eine größere Ausdehnung einen kürzeren Abstand und eine geringere Ausdehnung einen größeren Abstand des Verkehrsteilnehmers vom eigenen Flugzeug anzeigt;
d3) eine zweite Dimension (36) etwa parallel zur zweiten Gitterliniengruppe (34) aufweist, deren Orientierung anzeigt, ob der Verkehrsteilnehmer steigt, sinkt oder seine relative Flughöhe zum eigenen Flugzeug beibehält;
**dadurch gekennzeichnet**, daß
e) die erste Gruppe von Gitterlinien (32) eine horizontal in bezug auf einen Betrachter des ersten Gitters (22, 24) verlaufende Mittellinie aufweist, welche die Flughöhe des eigenen Flugzeugs wiedergibt, während die restlichen Gitterlinien zylindrisch derart gebogen sind, daß sie von der mittleren horizontalen Linie des ersten Gitters aus leicht weggebogen sind und somit die Szene in dreidimensionaler Perspektive darstellen; und
f) das Bezugssymbol (26, 28) auf der mittleren horizontalen Linie angeordnet ist.

2. Vorrichtung nach Anspruch 1, **dadurch gekennzeichnet,** daß ein zweites Gitter (24) vorgesehen ist und einen rückwärtigen Ausblick aus dem eigenen Flugzeug wiedergibt und dabei umfaßt:
a) eine erste Gruppe im wesentlichen paralleler Gitterlinien, deren Abstand unterschiedliche Höhendifferenzwerte zum eigenen Flugzeug wiedergibt;
b) eine zweite Gruppe im wesentlichen paralleler Gitterlinien, welche die erste Gruppe von Gitterlinien überlappen und wobei jede der ersten Gitterlinien im wesentlichen aufjeder der zweiten Gitterlinien senkrecht steht und der Abstand jeder Gitterlinie der zweiten Gruppe einen bestimmten Azimutwert bezogen auf die Flugrichtung des eigenen Flugzeugs wiedergibt;
c) ein auf dem zweiten Gitter (24) in einem Schnittpunkt einer der ersten Gitterlinien mit einer der zweiten Gitterlinien angeordnetes, den Ort des eigenen Flugzeugs im zweiten Gitter darstellendes Verkehrssymbol (28); und
d) wenigstens ein einen Verkehrsteilnehmer darstellendes Verkehrssymbol (30), wobei
d1) das Verkehrssymbol sich im zweiten Gitter an einem Ort befindet, der die Höhe und den Azimut des Verkehrsteilnehmers bezogen auf das eigene Flugzeug anzeigt;
d2) eine Ausdehnung (38) längs der ersten Gitterliniengruppe (32) hat, welche den Abstand des Verkehrsteilnehmers vom eigenen Flugzeug anzeigt, wobei eine größere Ausdehnung einen kürzeren Abstand und eine geringere Ausdehnung einen größeren Abstand des Verkehrsteilnehmers vom eigenen Flugzeug anzeigt;
d3) eine zweite Dimension (36) etwa parallel zur ersten Gitterliniengruppe aufweist, wobei die zweite Dimension zusammen mit der Ausdehnung das Symbol von bestimmter Form und Orientierung bildet, welche anzeigt, ob der Verkehrsteilnehmer steigt, sinkt oder seine relative Flughöhe zum eigenen Flugzeug beibehält;
e) eine horizontal in bezug auf einen Beobachter des ersten Gitters (22, 24) verlaufende und die Flughöhe des eigenen Flugzeugs wiedergebende Mittellinie aufweist, welche die Flughöhe des eigenen Flugzeugs wiedergibt, wobei die restlichen Gitterlinien zylindrisch derart gebogen sind, daß sie von der mittleren horizontalen Linie des ersten Gitters leicht weggebogen sind und somit die Szene in dreidimensionaler Perspektive darstellen; und
f) das Bezugssymbol (26, 28) auf der mittleren horizontalen Linie angeordnet ist.

3. Vorrichtung nach Anspruch 1 oder 2, **dadurch gekennzeichnet,** daß das Verkehrssymbol (30) eine charakteristische Form hat, welche anzeigt, ob der wiedergegebene Verkehrsteilnehmer sich dem eigenen Flugzeug nähert oder sich von diesem entfernt.

4. Vorrichtung nach Anspruch 1, 2 oder 3, **dadurch gekennzeichnet**, daß
a) der Ort jedes Verkehrssymbols (30) in bezug auf die erste Gruppe von Gitterlinien (32) eine Höhenlage des entsprechenden Verkehrsteilnehmers in bezug auf das eigene Flugzeug anzeigt, wobei jede Gitterlinie einen bestimmten Höhenwert wiedergibt; und
b) der Ort jedes Verkehrssymbols (30) bezogen auf die zweite Gruppe von Gitterlinien (34) einen Azimutwert des entsprechenden Verkehrsteilnehmers im Verhältnis zum eigenen Flugzeug anzeigt, wobei jede Gitterlinie einen bestimmten Azimutwert darstellt.

5. Vorrichtung nach einem der vorangehenden Ansprüche, **dadurch gekennzeichnet,** daß jede Gitterlinie der zweiten Gruppe (24) geradlinig und im gleichen Abstand von einer anderen Gitterlinie angeordnet ist.

6. Vorrichtung nach einem der vorangehenden Ansprüche, **dadurch gekennzeichnet,** daß
a) jedes Verkehrssymbol (30) eine balkenförmige Gestalt (38) etwa parallel zur ersten Gruppe von Gitterlinien (32) aufweist;
b) jede balkenförmige Gestalt (38) eine ihr überlagerte geometrische Form (36) hat;
c) eine erste geometrische Form (36) bezogen auf dem Betrachter oberhalb des Balkens angeordnet eine zunehmende Flughöhe eines wiedergegebenen Verkehrsteilnehmers anzeigt;
d) eine erste geometrische Form (36) bezogen auf den Betrachter unterhalb des Balkens (38) angeordnet eine abnehmende Flughöhe eines Verkehrsteilnehmers wiedergibt;
e) eine zweite geometrische Figur (40) oberhalb des Balkens eine konstante Flughöhe eines wiedergegebenen Verkehrsteilnehmers anzeigt; und
f) die zweite geometrische Figur (40) unterhalb des Balkens eine unbekannte Flughöhe eines wiedergegebenen Verkehrsteilnehmers anzeigt.

7. Vorrichtung nach einem der vorangehenden Ansprüche, **dadurch gekennzeichnet,** daß
a) jedes der Verkehrssymbole (30) eine variable Gestalt hat, indem eine Gestalt eine bekannte Flughöhe des Verkehrsteilnehmers und eine andere Gestalt eine unbekannte Flughöhe des Verkehrsteilnehmers anzeigt; und
b) jedes der Verkehrssymbole (30) in seiner Farbe veränderbar ist und eine bestimmte Farbe einen bestimmten Zustand des Verkehrsteilnehmers wiedergibt.

8. Vorrichtung nach Anspruch 7, **dadurch gekennzeichnet**, daß
a) jede geometrische Figur (36) einer ersten Farbe einen Auflösungsalarm, und
b) jede geometrische Figur einer zweiten Farbe einen Verkehrsalarm anzeigt.

## Revendications

1. Dispositif d'affichage d'informations de trafic situé dans un aéronef particulier, pour l'observation du trafic dans un volume autour dudit aéronef particulier, comprenant une première grille (22) représentant une vue vers l'avant à partir dudit aéronef particulier, ladite première grille comprenant :
a) un premier ensemble de traits approximativement parallèles (32) espacés de manière à représenter différentes valeurs d'altitude par rapport audit aéronef particulier;
b) un second ensemble de traits approximativement parallèles (34), qui chevauche le premier ensemble de traits (32) de la grille, chaque trait dudit premier ensemble de traits de la grille étant approximativement perpendiculaire à chaque trait dudit second ensemble de traits de la grille, et chaque trait dudit second ensemble de traits de la grille étant espacé de manière à représenter une valeur particulière de l'azimut par rapport à un cap dudit aéronef particulier;
c) un symbole de référence (26) situé sur ladite première grille (22) au niveau d'une intersection d'un trait dudit premier ensemble de traits (32) de la grille et d'un trait dudit second ensemble de traits (34) de la grille, représentant un emplacement dudit aéronef particulier sur ladite première grille; et
d) au moins un symbole de trafic (30) représentant une entité de trafic, pour lequel
d1) ledit symbole de trafic est situé sur ladite première grille en un emplacement de manière à indiquer l'altitude et l'azimut de l'entité de trafic par rapport audit aéronef particulier,
d2) possède une largeur (38) approximativement parallèlement audit premier ensemble de traits (32) de la grille, qui indique la distance de l'entité du trafic par rapport audit aéronef particulier, une largeur supérieure indiquant une distance plus faible entre l'entité du trafic et ledit aéronef particulier, et une largeur plus étroite indiquant une distance plus grande,
d3) possède une seconde dimension (36) approximativement parallèlement audit second ensemble de traits (34) de la grille avec une orientation qui indique si l'entité de trafic monte, descend, ou reste à une altitude constante par rapport à l'aéronef particulier;
caractérisé en ce que
e) ledit premier ensemble de traits (32) de la grille possède un trait médian horizontal par rapport à un observateur de ladite première grille (22) et représentant une altitude dudit aéronef particulier, et les autres traits de la grille ont une forme cylindrique de telle sorte que lesdites autres traits se dispersent graduellement dans des directions s'écartant légèrement du trait horizontal médian de ladite première grille et présentent de ce fait la scène sous la forme d'une perspective tridimensionnelle; et
f) ledit symbole de référence (26,28) est situé sur le trait horizontal médian.

2. Dispositif selon la revendication 1, caractérisé en ce qu'il est prévu une seconde grille (24) représentant une vue arrière à partir dudit aéronef particulier, et comprenant :
a) un premier ensemble de traits approximativement parallèles espacés de manière à représenter différentes valeurs d'altitude par rapport audit aéronef particulier;
b) un second ensemble de traits approximativement parallèles, qui chevauche le premier ensemble de traits de la grille, chaque trait dudit premier ensemble de traits de la grille étant approximativement perpendiculaire à chaque trait dudit second ensemble de traits de la grille, et chaque trait dudit second ensemble de traits de la grille étant espacé de manière à représenter une valeur particulière de l'azimut par rapport à un cap dudit aéronef particulier;
c) un symbole de référence (28) situé sur ladite seconde grille (24) au niveau d'une intersection d'un trait dudit premier ensemble de traits de la grille et d'un desdits traits dudit second ensemble de traits de la seconde grille, représentant un emplacement dudit aéronef particulier sur ladite seconde grille; et
d) au moins un symbole de trafic (30) représentant une entité de trafic, pour lequel
d1) ledit symbole de trafic est situé sur ladite seconde grille en un emplacement de manière à indiquer l'altitude et l'azimut de l'entité de trafic par rapport audit aéronef particulier,
d2) possède une largeur (38) approximativement parallèlement audit premier ensemble de traits de la grille, qui indique une distance de l'entité du trafic par rapport audit aéronef particulier, une largeur supérieure indiquant une distance plus faible entre l'entité du trafic et ledit aéronef particulier, et une largeur plus étroite indiquant une distance plus grande,
d3) possède une seconde dimension (36) approximativement parallèlement audit second ensemble de traits de la grille, la seconde dimension formant, en combinaison avec ladite largeur, le symbole (30) possédant une forme et une orientation particulières, qui indiquent si l'entité de trafic monte, descend ou reste à une altitude constante par rapport à l'aéronef particulier;
e) possède un trait médian horizontal par rapport à un observateur de ladite seconde grille (24) et représentant une altitude dudit aéronef particulier, et les autres traits de la grille ont une forme cylindrique de telle sorte que lesdites autres traits se dispersent graduellement dans des directions s'écartant légèrement dudit trait horizontal médian de ladite seconde grille et présentent de ce fait la scène sous la forme d'une perspective tridimensionnelle; et
f) ledit symbole de référence (26) est situé sur le trait horizontal médian.

3. Dispositif selon la revendication 1 ou 2, caractérisé en ce que ledit symbole de trafic (30) présente une forme caractéristique indiquant si l'entité de trafic représentée se rapproche ou s'écarte dudit aéronef particulier.

4. Dispositif selon la revendication 1, 2 ou 3, caractérisé en ce que
a) l'emplacement de chacun desdits symboles de trafic (30) par rapport audit premier ensemble de traits (32) de grille indique une altitude de l'entité de trafic respective par rapport audit aéronef particulier, chaque trait de grille représentant une valeur d'altitude particulière; et
b) l'emplacement de chacun desdits symboles de trafic (30) par rapport audit second ensemble de traits (34) de grille indique un azimut de l'entité de trafic respective par rapport audit aéronef particulier, chaque trait de grille représentant une valeur particulière en azimut.

5. Dispositif selon l'une des revendications précédentes, caractérisé en ce que chaque trait dudit second ensemble de traits (34) de grille est rectiligne et équidistant d'un autre trait de grille.

6. Dispositif selon l'une des revendications précédentes, caractérisé en ce que :
a) chaque symbole de trafic (30) possède la forme d'une barre (38) approximativement parallèle audit premier ensemble de traits (32);
b) une figure de forme géométrique (36) est superposée à chaque figure en forme de barre (38);
c) une première figure de forme géométrique (36) située au-dessus de la barre (38) par rapport à l'observateur indique l'altitude ascendante d'une entité de trafic représentée;
d) la première figure de forme géométrique (36) située au-dessous de la barre (38) par rapport à l'observateur indique une altitude descendante d'une entité de trafic représentée;
e) une seconde figure de forme géométrique (40) située au-dessus de la barre indique une altitude constante d'une entité de trafic représenté; et
f) la seconde figure de forme géométrique (40) située au-dessous de la barre indique une altitude inconnue d'une entité de trafic représentée.

7. Dispositif selon l'une des revendications précédentes, caractérisé en ce que
a) chacun desdits symboles de trafic (30) a une forme variable, une forme indiquant une altitude connue d'une entité de trafic et une autre forme indiquant une altitude inconnue de l'entité de trafic; et
b) chacun desdits symboles de trafic (30) a une couleur variable, une couleur particulière indiquant un état particulier de l'entité de trafic.

8. Dispositif selon la revendication 7, caractérisé en ce que
a) chaque figure de forme géométrique (36) possédant une première couleur indique une alerte de résolution; et
b) chaque figure de forme géométrique possédant une seconde couleur indique une alerte de trafic.
